Europäisches Patentamt

European Patent Office

Office européen des brevets

(11) Publication number: **0 095 668**
**B1**

(12) **EUROPEAN PATENT SPECIFICATION**

(45) Date of publication of patent specification: **08.04.87**

(21) Application number: **83104935.8**

(22) Date of filing: **19.05.83**

(51) Int. Cl.⁴: **B 22 F 1/00,** B 23 K 35/30, B 23 P 6/04

(54) **Homogeneous alloy powder and superalloy article repair method.**

(30) Priority: **28.05.82 US 383077**

(43) Date of publication of application:
**07.12.83 Bulletin 83/49**

(45) Publication of the grant of the patent:
**08.04.87 Bulletin 87/15**

(84) Designated Contracting States:
**DE FR GB IT NL SE**

(56) References cited:
**EP-A-0 024 142**
**FR-A-2 296 491**
**GB-A- 821 787**

(73) Proprietor: **GENERAL ELECTRIC COMPANY**
**1 River Road**
**Schenectady New York 12305 (US)**

(72) Inventor: **Smith, Murray Sawyer, Jr.**
**8 Burnham Street**
**Cincinnati Ohio 45218 (US)**
Inventor: **Perkins, Roger Johnson**
**3561 Horncastle Drive**
**Evendale Ohio 45242 (US)**
Inventor: **Fryxell, Robert Edward**
**8430 Old Hickory Drive**
**Cincinnati Ohio 45243 (US)**
Inventor: **Young, William Rollin**
**4628 Fields-Ertel Road**
**Cincinnati Ohio 45241 (US)**

(74) Representative: **Catherine, Alain**
**General Electric - Deutschland Munich Patent**
**Operation Frauenstrasse 32**
**D-8000 München 5 (DE)**

Courier Press, Leamington Spa, England.

**Description**

This invention relates to the repair of superalloy articles, and, more particularly, to an alloy powder mixture and a method for the repair of nickel-base and cobalt-base superalloy articles.

Nickel-base and cobalt-base superalloys are used in high temperature operating gas turbine engine components because of the high temperature operating conditions. However, because such operating conditions are strenuous, cracks or other types of damage or deterioration can occur from such experiences as thermal cycling or airborne object impact, or their combinations. Also, discontinuities such as shrinkage, inclusions and cracks can occur during manufacture of such components. Because of the relatively high cost of such components, it is desirable to repair rather than to replace such articles.

One method for cleaning and repairing superalloy articles is described in U.S. Patent 4,098,450. Described is a method using fluoride ions to contact oxide in a narrow crack or crevice to convert the oxide to gaseous fluoride. Subsequently, in one form of the invention, a repair alloy is applied to repair the crack or crevice.

In other repair methods which have been used for many years in the gas turbine engine art, oxides have been removed from parts to be repaired by mechanical means, or, predominantly in the case of cobalt-base alloys, through the use of hydrogen prior to application of a brazing alloy of the simple alloy or wide-gap brazing mixture type. Such wide-gap brazing alloys have been described in the art, for example in U.S. Patent 3,155,491.

Currently in use in certain gas turbine engines are nickel-based superalloy turbine vane castings one type of which is made from a nickel-base superalloy commercially available as René 77 alloy and consisting nominally, by weight, of 0.015% B, 0.07% C, 15% Cr, 4.2% Mo, 3.3% Ti, 4.3% Al, 15% Co, with the balance Ni and incidental impurities. It has been observed that such a vane casting can develop damage, such as areas of corrosion, airborne particle contact, a number of small cracks, or their combinations, as a result of operation at high temperature. Currently, such cracks are repaired by methods such as welding or by use of the above-described method of U.S. Patent 4,098,450. Repair alloys in the form of powder mixtures used in U.S. Patent 4,098,450 method heretofore include high and low melting components which are non-homogenous in that they are based on different alloy systems. In one example for the repair of René 77 alloy, the high melting component was René 77 alloy in powder form and the low melting component was a Ni-base-Cr-Co-Ta-Al-B alloy powder sometimes called D-15 alloy and described in U.S. Patent 3,759,692. Other powder mixtures include D-15 alloy with René 80 alloy and with X-40 alloy, both of which are commercially available. The result using such powder mixtures is a repair material which has hot corrosion resistance less than is desirable for present intended applications, particularly if the repaired article is not coated subsequently.

FR—A—2 296 491 describes a mixture of metallic fillers including a particulate material having a composition corresponding essentially to the composition of the articles to be repaired.

EP—A—24142 discloses a two-component particulate mixture. The first portion consists essentially of the same superalloy material as the article to be repaired and the second portion consists essentially of a braze component containing a melting point depressant.

It is a principal object of this invention to provide an alloy powder mixture of improved hot corrosion resistance, which is homogenous in that both high and low melting components of the mixture are based on the same, homogenous base alloy system, with one component including at least one melting point depressant.

Another object is to provide such a powder which can be used in the repair of discontinuities or damage in the surface of or through nickel-base or cobalt-base superalloy articles.

It is still another object of the present invention to provide a method for using such a homogenous powder mixture in the repair of superalloy articles.

These and other objects and advantages will be more fully understood from the following detailed description and the examples.

Briefly, the powder mixture of the present invention is a mixture of a nickel-base superalloy first powder and a nickel-base superalloy second powder, the combination defining a homogenous powder system;

the first powder characterized by superior hot corrosion resistance along with good oxidation resistance and mechanical properties, and the substantial absence of melting point depressant elements selected from Si and B in amounts greater than 1 wt% Si and 0.05 wt% B, comprises, by weight, 0.01 to 0.2% C, 16 to 23% Cr, 2 to 10% Mo, 15 to 21% Fe, up to 6% of the sum of Nb and Ta, up to 2% Ti, less than 2% Al, less than 3% Co, up to 2% W, with the balance Ni and incidental impurities; and

the second powder having a composition which includes all the elements of the first powder within the respective percentage range of that of the first powder, with the second powder comprising, by weight, 0.01 to 0.2% C, 16 to 23% Cr, 2 to 10% Mo, 15 to 21% Fe, up to 6% of the sum of Nb and Ta, up to 2% Ti, less than 2% Al, less than 3% Co, up to 2% W, 0.5 to 5% B, up to 6% Si, with the balance Ni and incidental impurities, and having a melting temperature lower than that of the first powder; the mixture comprising, by weight, 30 to 70% of the first powder and 30 to 70% of the second powder. A preferred form of the second powder has a composition within the range of that of the preferred first powder above with the

2

inclusion of, by weight, of 0.5 to 4% B and up to 3% Si, with the specifically preferred range including 0.8 to 4% B and up to 2.5% Si.

In a more specific embodiment the first powder comprises, by weight, 0.02 to 0.08% C, 16 to 21% Cr, 2.5 to 3.5% Mo, 15 to 21% Fe, 4.5 to 5.5% of the sum of Nb and Ta, 0.7 to 1.2% Ti, 0.3 to 0.7% Al, up to 1% Co, with the balance Ni and incidental impurities; and the second powder includes, in addition, 2 to 2.5 weight% B.

In another embodiment the first powder comprises, by weight, 0.05 to 0.15% C, 19 to 23% Cr, 7 to 10% Mo, 16 to 20% Fe, 0.5 to 2.5% Co, 0.2 to 1% W, with the balance Ni and incidental impurities; and the second powder includes, in addition, 3 to 4 weight% B.

The method of the present invention includes providing such a homogenous alloy powder mixture with the proportion of the first powder to the second powder selected so that consolidation of powders occurs at the intended temperature of application of the powder mixture: the low melting component melts and bonds and/or diffuses with the high melting component which may partially melt. Bulk powder mixture shrinkage occurs, preferably approaching theoretical density, and discontinuities are filled. After cleaning the article at least in the portion to be repaired, the mixture is applied to the cleaned portion of the article and then heated in a vacuum at a temperature at which both powder components of the mixture will consolidate substantially completely.

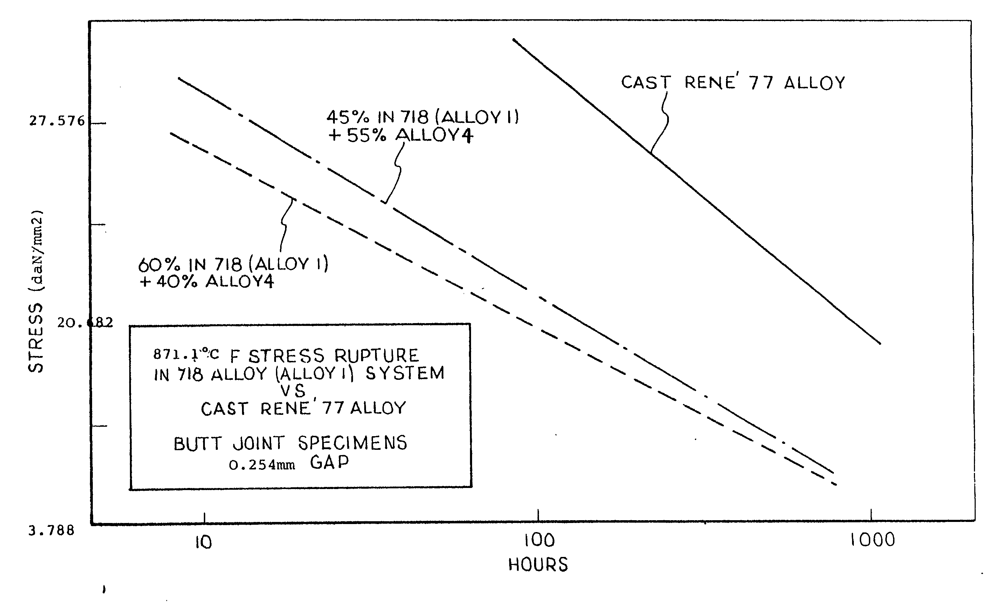

The drawing is a graphical comparison of certain stress rupture properties of the mixture of the present invention with cast René 77 alloy.

Vane assemblies used in the turbine section of gas turbine engines experience strenuous operating conditions including a combination of mechanical stresses and thermal stresses. Accordingly, such vane assemblies have been designed to be air cooled and have been manufactured from costly superalloys, particularly of the nickel-base superalloy type. A variety of such vane assembles have been described in the art, one example of which is US Patent 3 628 880. Because of the high cost of manufacturing such a high temperature operating article, generally it is more economical to repair such a component rather than to replace it after wear or damage has occurred. The present invention provides an improved repair powder mixture and a method which extends the service life of such a component further than present repair methods.

During the evaluation of the present invention, a wide variety of powdered alloys with potential use as the "system base alloy" (first powder) of the mixture were studied. Modifications to such potential system base alloys through the addition of boron (B), sometimes in combination with silicon (Si), were evaluated for potential use as the modified alloy (second powder).

The present invention recognizes that a particularly defined alloy first powder, having superior hot corrosion resistance along with good oxidation resistance and mechanical properties, can be modified through the addition of, by weight, 0.5—5% B and optionally up to 6% Si to provide a homogenous alloy powder mixture. Such a mixture can be provided through the combination of the unmodified or system base alloy with the modified alloy derived from such system base alloy, in the range of, by weight, 30—70% of the system base alloy (first powder) and 30—70% of the modified alloy (second powder). If the intended application of the alloy powder mixture of the present invention is for the repair of tight cracks at a selected repair temperature, then the ratio between the first and second powders in the mixture can be adjusted to provide adequate melting and flow for such purpose.

The present invention uses the highly effective melting point depressant elements B and optionally Si in a specific range to modify a nickel-base superalloy which is characterized by the substantial absence of those melting point depressants in amounts greater than their normal impurity levels. It further recognizes that a mixture of such modified alloy with its parent alloy in a powder combination results in a unique homogenous-base alloy powder mixture.

Selection of the system base alloy as the first powder of the mixture and which is modified according to the present invention is dependent, at least in part, on the type of article to be repaired. For example, as was mentioned above, certain gas turbine engine turbine vanes are manufactured from the above-described commercially available René 77 alloy. Therefore, evaluation of the present invention compares certain system base alloys, modified alloys and mixtures of the two with mechanical, corrosion and oxidation data for René 77 alloy as a standard. The data in the following tables, particularly in Tables IV, V and VI and in the drawing show the capability of the present invention for extending the life of the component repaired using the mixture.

Because nickel-base superalloys such as René 77 have a melting temperature in the range of 1287.8—1343.3°C, the mixtures of powders shown in the following tables as specific examples were selected to be applied and melted in the range of 1176.6—1218.3°C or below. However, it will be understood by those skilled in the art that other repair temperatures and other mixtures of powders within the scope of the present invention can be selected in connection with a particular article.

The following Tables I, II and III identify the composition of system base alloys, modified alloys and mixtures of alloys evaluated in connection with the present invention, with Table II specifying modifications of the alloys of Table I. Unless otherwise stated, percentages herein are by weight.

TABLE I
System base alloys
(wt %, Balance Ni and incidental impurities)

|  |  | Alloy 1 in 718 | Alloy 2 hastealloy X | Alloy 3 René 77 |
|---|---|---|---|---|
| Si |  | 0.35 max | 1 max | 0.2 max |
| B |  | 0.006 max | 0.008 max | 0.012—0.02 |
| C |  | 0.02—.08 | 0.05—.2 | 0.05—0.09 |
| Cr |  | 16—21 | 19—23 | 14—15.3 |
| Mo |  | 2.5—3.5 | 7.5—10 | 3.9—4.5 |
| Fe |  | 15—21 | 15—20 | 0.5 max |
| Nb, | Nb+Ta |  |  |  |
| Ta |  | 4.6—5.5 |  |  |
| Ti |  | 0.7—1.2 |  | 3—3.7 |
| Al |  | 0.3—0.7 |  | 4—4.6 |
| Co |  | 1 max | 0.5—2.5 | 14.2—15.8 |
| W |  |  | 0.2—1 |  |

TABLE II
System base alloys modified with B and/or Si
(wt %, Balance Ni and incidental impurities)

| System base alloy | 1 | 1 | 1 | 2 | 2 | 2 |
|---|---|---|---|---|---|---|
| Modified alloy: | 4 | 5 | 6 | 7 | 8 | 9 |
| Si | 0.35 max | 2.0—2.5 | 0.35 max | 1 max | 1 max | 1.8—2.2 |
| B | 2.0—2.8 | 0.8—1.2 | 2.8—3.2 | 2.8—3.4 | 1.8—2.2 | 1.0—1.2 |
| C | 0.02—0.08 | 0.02—0.08 | 0.02—0.08 | 0.05—0.15 | 0.05—0.2 | 0.05—0.2 |
| Cr | 16.5—20.4 | 16.6—20.3 | 16—21 | 19.8—22 | 19—23 | 19—23 |
| Mo | 2.7—3.2 | 2.7—3.2 | 2.5—3.5 | 7.7—9 | 7.5—10 | 7.5—10 |
| Fe | 16—19.9 | 16—19.9 | 15—21 | 16.4—19 | 15—20 | 15—20 |
| Nb+Ta | 4.6—5.3 | 4.6—5.3 | 4.6—5.5 |  |  |  |
| Ti | 0.7—1.1 | 0.7—1.1 | 0.7—1.2 |  |  |  |
| Al | 0.3—0.7 | 0.3—0.7 | 0.3—0.7 |  |  |  |
| Co | 1 max | 1 max | 1 max | 0.5—2.5 | 0.5—2.5 | 0.5—2.5 |
| W |  |  |  | 0.2—1 | 0.2—1 | 0.2—1 |

4

TABLE III
Mixture of powders (normal wt%)

| Mixture | Base alloy | | Modified alloy | |
| --- | --- | --- | --- | --- |
| | No. | % | No. | % |
| A | 1 | 60 | 7 | 40 |
| B | 2 | 50 | 10 | 50 |
| C | 1 | 60 | 8 | 40 |
| D | 2 | 40 | 12 | 60 |

Table I presents a variety of system base alloys, with alloy 1 (IN 718 alloy) and alloy 2 (Hastealloy X alloy) representing alloys within the specifically preferred range of the present invention as the first powder. Alloy 3 presents the composition range of René 77 alloy, used as the standard for comparison.

Table II identifies the composition ranges of alloys which were modifications of the alloys in Table I, with the addition of B and optionally Si. The modified alloys of Table II fall within the range of the system base alloy from which they were derived. In Table II, alloys 4 through 9, modified from alloys 1 and 2, are within the scope of the preferred range of the present invention based on the best combination of hot corrosion and oxidation resistance, apparently from the inclusion in their composition of less than 3% Co, less than 2% Al and more than 16% Cr based on the system base alloy from which they were derived. This balance of the content of Al, Co and Cr is based on environmental resistance data represented by that presented in the tables below.

Table III presents some mixtures of system base alloy powders and modified alloy powders used in the evaluation of the present invention. Because hot corrosion resistance is an important characteristic for most high temperature applications of the powders and mixtures of powders of the present invention, the alloys in Tables I and II and the mixture of powders in Table III were evaluated under the conditions shown in Tables IV and V. The test specimens were in cast form.

TABLE IV
Average hot corrosion test data
704.4°C/10 ppm sea salt/2% fuel sulfur
(mm maximum penetration after 500 hrs)

| System base alloy | mm | Cast B mod. alloy | | Cast mixture of powders | | Cast B+Si mod. alloy | | Cast mixture of powders | |
| --- | --- | --- | --- | --- | --- | --- | --- | --- | --- |
| | | No. | mm | mix | mm | No. | mm | mix | mm |
| 1 | 0.3[a] | 4 | 0.043 | A | 0.018 | 5 | 0.0254 | C | 0.015 |
| 2 | 1.2 | 7 | 0.040 | B | 0.0254 | 9 | 0.030 | D | 0.040 |
| 3 | 6[b] | | | | | | | E | 0.175 |

[a] 250 hrs
[b] Standard selected for comparison

TABLE V
Average hot corrosion test data—cast alloy pins
926.5°C/5 ppm sea salt
(mm maximum penetration after 500 hrs)

| System base alloy | | Cast modified alloys (nominal wt% additive) | | | | | | | | | | | |
|---|---|---|---|---|---|---|---|---|---|---|---|---|---|
| | | 1% B | | 1.5% B | | 2% B | | 2.5% B | | 3% B | | 2.5% Si+1% B | |
| No. | mm | No. | mm | No. | mm | No. | mm | No. | mm | No. | mm | No. | mm |
| 1 | 0.127 | | | | | 4 | 0.127 | | | 6 | 0.152 | 5 | 0.101 |
| 2 | 0.127 | | | | | 8 | 0.0762 | | | 7 | 0.127 | | |
| 3[a] | 0.762—1.524 | | | | | | | | | | | | |

[a] Standard corrosion values for René 77 alloy selected for comparison.

With reference to Table IV, it is to be noted that all system base alloys and all of their modifications and mixtures show good average hot corrosion resistance, at least about as good as and generally better than René 77 alloy (alloy 3). Alloy 3 is one from which certain vane castings are made and which has good hot corrosion resistance. In this evaluation, it was used as a standard for comparison. System base alloys 1 and 2 showed particularly good hot corrosion resistance.

Table V presents 926.5°C average hot corrosion test data on a variety of cast modified alloys as well as on the system base alloy. As in Table IV, system base alloys 1 and 2 and their various modifications show excellent hot corrosion resistance at 926.5°C under the conditions stated.

TABLE VI

982°C Dynamic oxidation test results—cast alloy pins
(mm maximum penetration after 650 hrs)

| System base alloy | | Cast modified alloys | |
| --- | --- | --- | --- |
| No. | mm | No. | mm |
| 1 | | 7 | 0.061 |
| 1 | | 9 | 0.122 |
| 2 | 0.048 | 11 | 0.101 |
| 2 | | 10 | 0.129 |
| 3 | 0.0508—0.066 | | |

[a] Standard selected for comparison.

Because of the cyclic high temperature oxidation conditions experienced in the hotter operating portions of gas turbine engines, dynamic oxidation resistance is important to the alloys used in the mixture of the present invention. Table VI presents some 982°C dynamic oxidation test results on cast alloy pin specimens of the system base alloys and of modified alloys derived from such system base alloys. The cyclic oxidation resistance of the modifications to system base alloys 1 and 2 is good.

Based on the hot corrosion data of Tables IV and V and the dynamic oxidation data of Table VI, it can be seen that the mixture of the present invention, and particularly those based on alloys 1 and 2, provides a good combination of corrosion and oxidation resistance.

The drawings presents a comparison of 871°C stress rupture data for mixtures within the scope of the present invention and for cast base alloy René 77, used for turbine nozzle segments. For the repair of parts, generally it is preferred to use a repair alloy which will withstand the highest stress to which any region of the part will be subjected. Also the repair alloy should have oxidation and corrosion resistance about the same as or better than the alloy of the part. However, generally, such cast nozzle segments are relatively lowly stressed, except in certain regions such as flanges, and can be repaired using a lesser strength material. As shown in the drawing, mixtures within the scope of the present invention have a 871°C stress rupture life of about 70% of that of the cast base alloy René 77. This property was determined to be very acceptable for repair of such nozzle segment areas which commonly need to be repaired. The excellent oxidation and hot corrosion resistance of the mixture of the present invention has been shown in tables above.

**0 095 668**

TABLE VII
Powder melting data

| Powder | Temp. °C | % Melted |
|---|---|---|
| Alloy 4 | 1204.4 | 100 |
| Alloy 4 | 1162.8 | 0 |
| 35% Alloy 4+65% Alloy 1 | 1204.4 | 100 |
| 30% Alloy 4+70% Alloy 1 | 1204.4 | 100 |
| Alloy 5 | 1204.4 | 100 |
| Alloy 5 | 1162.8 | 0 |
| 50% Alloy 5+50% Alloy 1 | 1204.4 | 100 |
| 45% Alloy 5+55% Alloy 1 | 1204.4 | 95—100 |
| Alloy 7 | 1232.2 | 100 |
| Alloy 7 | 1204.4 | 5 |
| 60% Alloy 7+40% Alloy 2 | 1232.2 | 5 |
| Alloy 9 | 1232.2 | 100 |
| Alloy 9 | 1204.4 | 90 |
| 60% Alloy 9+40% Alloy 2 | 1232.2 | 5 |

The above Table VII presents some powder melting data based on testing conducted on powder disposed on test specimens.

As was mentioned before, an object of the specific examples presented in the application was to prepare a powder mixture which would consolidate at a temperature of up to about 1218.3°C. The data of Table VII are presented to show that by adjusting the proportions between the first powder and the second powder of the mixture of the present invention, the desired consolidation temperature, balance between porosity in the buildup, and wettability and flow properties can be obtained in a homogenous system.

The mixture of the present invention comprises, by weight, 30—70% of the first powder and 30—70% of the second powder. Greater than 70% of the first powder results in a structure which is too porous after melting and solidifying. Greater than 70% of the second powder becomes too fluid upon melting and tends to flow away from its intended area of application. Within the range of the present invention, the melting point of the second or lower melting alloy is raised so quickly by the first or system base powder that the mixture can stay in place on an inclined surface. This repair is accomplished with little or no sacrifice in structural material properties.

A statistical analysis was conducted of process parameters, such as height of green buildup, binders to hold the mix initially, alloy mix using Alloy 1 and Alloy 4 within the range of this invention, times from 5 to 30 minutes, and temperature. The results of the analysis showed that temperature is by far the most influential process variable in regard to porosity, diffusion and height of buildup. With such composition, the combined effect of time and temperature also influence all three characteristics, but to a lesser degree than temperature alone. The preferred form of the method of the present invention for the mixture of Alloy 1 and Alloy 4 or Alloy 5 includes heating at about 1204.4°C for about 30 minutes in vacuum. To allow the article being repaired and the repair alloy to arrive at a uniform repair temperature and to limit solid state diffusion, it is preferred to stabilize thermally at a temperature below the melting temperature of the lower melting component of the mixture, for example at 1307.8°C, and then increase the temperature rapidly to the repair temperature.

**Claims**

1. A mixture of a Ni-base superalloy first powder and a Ni-base superalloy second powder, the combination defining a homogenous system;

the first powder characterized by superior hot corrosion resistance along with good oxidation

8

resistance and mechanical properties, and the substantial absence of melting point depressant elements selected from the group consisting of Si and B in amounts greater than 1 wt% Si and 0.05 wt% B;

the first powder comprising by weight, 0.01 to 0.2% C, 16 to 23% Cr, 2 to 10% Mo, 15 to 21% Fe, up to 6% of the sum of Nb and Ta, up to 2% Ti, less than 2% Al, less than 3% Co, up to 2% W, with the balance Ni and incidental impurities; and

the second powder having a composition which includes all of the elements of the first powder within the respective percentage range of that first powder, the second powder comprising, by weight, 0.01 to 0.2% C, 16 to 23% Cr, 2 to 10% Mo, 15 to 21% Fe, up to 6% of the sum of Nb and Ta, up to 2% Ti, less than 2% Al, less than 3% Co, up to 2% W, 0.5 to 5% B, up to 6% Si, with the balance Ni and incidental impurities, and having a melting temperature lower than that of the first powder;

the mixture comprises, by weight 30 to 70% of the first powder and 30 to 70% of the second powder.

2. The mixture of claim 1 in which

the first powder comprises, by weight, 0.02 to 0.08% C, 16 to 21% Cr, 2.5 to 3.5% Mo, 15 to 21% Fe, 4.5 to 5.5% of the sum of Nb and Ta, 0.7 to 1.2% Ti, 0.3 to 0.7% Al, up to 1% Co, with the balance Ni and incidental impurities; and

the second powder includes, in addition, 2 to 2.5 wt% B.

3. The mixture of claim 1 in which

the first powder comprises, by weight, 0.05 to 0.15% C, 19 to 23% Cr, 7 to 10% Mo, 16 to 20% Fe, 0.5 to 2.5% Co, 0.2 to 1% W, with the balance Ni and incidental impurities; and

the second powder includes, in addition, 3 to 4 wt% B.

## Patentansprüche

1. Mischung eines ersten Pulvers aus einer Nickelbasis-Superlegierung und einem zweiten Pulver aus einer Nickelbasis-Superlegierung, wobei die Mischung ein homogenes System bildet;

das erste Pulver zeichnet sich durch überlegene Warmkorrosionsbeständigkeit zusammen mit guter Oxidationsbeständigkeit und mechanischen Eigenschaften und praktisch dem Fehlen von den Schmelzpunkt senkenden Elementen aus, die aus der aus Si und B bestehenden Gruppe in Mengen von mehr als 1 Gew.-% Si und 0,05 Gew.-% B ausgewählt sind;

das erste Pulver enthält, in Gewichtsprozent, 0,01 bis 0,2% C, 16 bis 23% Cr, 2 bis 10% Mo, 15 bis 21% Fe, bis zu 6% der Summe von Nb und Ta, bis zu 2% Ti, weniger als 2% Al, weniger als 3% Co, bis zu 2% W, wobei der Rest aus Ni und zufälligen Verunreinigungen besteht; und

das zweite Pulver hat eine Zusammensetzung, die alle Elemente des ersten Pulvers innerhalb des entsprechenden Prozentbereichs des ersten Pulvers enthält, wobei das zweite Pulver, in Gewichtsprozent, 0,01 bis 0,2% C, 16 bis 23% Cr, 2 bis 10% Mo, 15 bis 21% Fe, bis zu 6% der Summe von Nb und Ta, bis zu 2% Ti, weniger als 2% Al, weniger als 3% Co, bis zu 2% W, 0,5 bis 5% B, bis zu 6% Si enthält, wobei der Rest aus Ni und zufälligen Verunreinigungen besteht und das zweite Pulver eine Schmelztemperatur hat, die niedriger als diejenige des ersten Pulvers liegt;

die Mischung enthält 30 bis 70 Gew.-% des ersten Pulvers und 70 bis 30% des zweiten Pulvers.

2. Mischung nach Anspruch 1, in der das erste Pulver, in Gewichtsprozent, 0,02 bis 0,08% C, 16 bis 21% Cr, 2,5 bis 3,5% Mo, 15 bis 21% Fe, 4,5 bis 5,5% der Summe von Nb und Ta, 0,7 bis 1,2% Ti, 0,3 bis 0,7% Al, bis zu 1% Co enthält, wobei der Rest aus Ni und zufälligen Verunreinigungen besteht; und

das zweite Pulver enthält zusätzlich 2 bis 2,5 Gew.-% W.

3. Mischung nach Anspruch 1, in der das erste Pulver, in Gewichtsprozent, 0,05 bis 0,15% C, 19 bis 23% Cr, 7 bis 10% Mo, 16 bis 20% Fe, 0,5 bis 2,5% Co, 0,2 bis 1% W, wobei der Rest aus Ni und zufälligen Verunreinigungen besteht; und

das zweite Pulver enthält zusätzlich 3 bis 4 Gewichtsprozent B.

## Revendications

1. Un mélange d'une première poudre de superalliage à base de Ni et d'une seconde poudre de superalliage à base de Ni, le combinaison définissant un système homogène;

la première poudre étant caractérisée par une excellente résistance à la corrosion à chaud, ainsi que de bonnes propriétés mécaniques et de résistance à l'oxydation, et par l'absence pratique d'éléments d'abaissement du point de fusion, sélectionnés dans le groupe comprenant Si et B, dans des proportions supérieures à 1% en poids de Si et à 0,05% en poids de B;

la première poudre comprenant, en poids: 0,01 à 0,2% de C, 16 à 23% de Cr, 2 à 10% de Mo, 15 à 21% de Fe, jusqu'à 6% de la somme de Nb et Ta, jusqu'à 2% de Ti, moins de 2% d'Al, moins de 3% de Co, jusqu'à 2% de W, le reste consistant en Ni et en impuretés occasionnelles; et

la seconde poudre ayant une composition qui comprend tous les éléments de la première poudre, dans les plages de pourcentage respectives de cette première poudre, la seconde poudre comprenant, en poids: 0,01 à 0,2% de C, 16 à 23% de Cr, 2 à 10% de Mo, 15 à 21% de Fe, jusqu'à 6% de la somme de Nb et Ta, jusqu'à 2% de Ti, moins de 2% d'Al, moins de 3% de Co, jusqu'à 2% de W, 0,5 à 5% de B, jusqu'à 6% de Si, le reste consistant en Ni et en impuretés occasionnelles, et cette seconde poudre ayant une température de fusion inférieure à celle de la première poudre;

le mélange comprenant, en poids, 30 à 70% de la première poudre et 30 à 70% de la seconde poudre.

**0 095 668**

2. Le mélange de la revendication 1, dans lequel

la première poudre comprend, en poids: 0,02 à 0,08% de C, 16 à 21% de Cr, 2,5 à 3,5% de Mo, 15 à 21% de Fe, 4,5 à 5,5% de la somme de Nb et Ta, 0,7 à 1,2% de Ti, 0,3 à 0,7% d'Al, jusqu'à 1% de Co, le reste consistant en Ni et en impuretés occasionnelles; et

la seconde poudre comprend, en plus, 2 à 2,5% en poids de B.

3. Le mélange de la revendication 1, dans lequel

la première poudre comprend, en poids: 0,05 à 0,15% de C, 19 à 23% de Cr, 7 à 10% de Mo, 16 à 20% de Fe, 0,5 à 2,5% de Co, 0,2 à 1% de W, le reste consistant en Ni et en impuretés occasionnelles; et

la seconde poudre comprend, en plus 3 à 4% en poids de B.

CAST RENE' 77 ALLOY

45% IN 718 (ALLOY I)
+ 55% ALLOY 4

60% IN 718 (ALLOY I)
+ 40% ALLOY 4

871.1°C F STRESS RUPTURE
IN 718 ALLOY (ALLOY I) SYSTEM
VS
CAST RENE' 77 ALLOY

BUTT JOINT SPECIMENS
0.254mm GAP

STRESS (daN/mm2)

27.576

20.682

3.788

10

100

1000

HOURS

0 095 668